# EUROPÄISCHE PATENTANMELDUNG

(11) **EP 4 531 016 A1**
(43) Veröffentlichungstag der Anmeldung: **02.04.2025**
(21) Anmeldenummer: 24162936.9
(22) Anmeldetag: 12.03.2024
(51) Int. Cl.: G08B 17/107, G01N 21/53

(54) **PARTIKELDETEKTIONSEINHEIT MIT DETEKTIONSKAMMER UND STRÖMUNGSLEITBAUTEIL**

(30) Priorität: 28.09.2023 EP 23200490; 21.02.2024 EP 24158783
(71) Anmelder: Wagner Group GmbH, 30853 Langenhagen (DE)
(72) Erfinder: FILIPPINI, Daniel, 30900 Wedemark (DE); BURKHARDT, Lutz, 30165 Hannover (DE); JANZ, Marcel, 30938 Großburgwedel (DE); WICKE, Andreas, 28211 Bremen (DE)
(74) Vertreter: Götz, Gudrun Veronika

(57) **Zusammenfassung**

Die Erfindung betrifft eine Partikeldetektionseinheit (100) zur Verwendung mit einem Ansaugpartikelerkennungssystem, die ein Gehäuse (110), mit einer darin angeordneten und von Umgebungslicht abgeschirmten Detektionskammer (120) aufweist, die einen Strömungseinlass (121) zum Eintritt einer Fluidströmung (F) und einen Strömungsauslass (122) zum Austritt der Fluidströmung (F) umfasst, sowie einen Lichtsender (130) und einen Lichtempfänger (140), die derart zueinander ausgerichtet sind, dass ein Detektionsbereich (DB) zur Detektion von in der Fluidströmung (F) enthaltenen Partikeln durch Überlagerung des von dem Lichtsender (130) gesendeten Lichts und des Einfallsbereichs des Lichtempfängers (140) innerhalb der Detektionskammer (120) definiert ist. Es ist die Aufgabe der vorliegenden Erfindung eine Partikeldetektionseinheit 100 zu schaffen, die einer schleichenden Verschmutzung der optischen Komponenten, zuverlässig vorbeugt. Die Aufgabe wird durch ein verschmutzungsminderndes Strömungsleitbauteil (150) zur Umlenkung einer über den Strömungseinlass (121) eintretenden Fluidströmung (F) in Richtung des Strömungsauslasses (122) gelöst, wobei das Strömungsleitbauteil (150) innerhalb der Detektionskammer (120) im Bereich der Fluidströmung (F), zwischen dem Strömungseinlass (121) und dem Strömungsauslass (122), jedoch außerhalb des Detektionsbereichs (DB) positioniert ist.

## Beschreibung

Die Erfindung betrifft eine Partikeldetektionseinheit, die zur Verwendung mit einem Ansaugpartikelerkennungssystem, bspw. zur Branderkennung ausgebildet ist. Die Partikeldetektionseinheit weist ein Gehäuse, mit einer darin angeordneten und von Umgebungslicht abgeschirmten Detektionskammer auf, die einen Strömungseinlass zum Eintritt einer Fluidströmung und einen Strömungsauslass zum Austritt der Fluidströmung umfasst, sowie einen Lichtsender und einen Lichtempfänger, die derart zueinander ausgerichtet sind, dass ein Detektionsbereich zur Detektion von in der Fluidströmung enthaltenen Partikeln durch Überlagerung des von dem Lichtsender gesendeten Lichts und des Einfallsbereichs des Lichtempfängers innerhalb der Detektionskammer definiert ist.

Partikeldetektionseinheiten werden oftmals für die Branderkennung, insbesondere in Gebäuden, Fahrzeugen, auf Schiffen usw. eingesetzt, wobei in der Umgebungsluft eines Überwachungsbereichs enthaltene Partikel, bspw. Rauchpartikel oder auch Aerosole, die auf einen Brand oder dessen Entstehung schließen lassen, mittels der Partikeldetektionseinheit erkannt werden. Bei einem Überwachungsbereich handelt es sich in der Regel um einen zu überwachenden Bereich, in dem sich Personen aufhalten, (wertvolle) Güter lagern und/oder eine erhöhte Brandgefahr besteht. Überwachungsbereiche können Teile eines Gebäudes, wie Räume, Lagerräume oder Serverräume sein, Teile eines Fahrzeugs, bspw. eines Schiffs, Zugs, Busses oder Flugzeugs, wie Fahrgastabteile oder Maschinenräume, aber auch ein Bereich in unmittelbarer Umgebung oder innerhalb eines Objekts, wie einer Maschine oder eines Schaltschranks.

Zur Erkennung von Partikeln befindet sich im Inneren des Gehäuses der Partikeldetektionseinheit die mit der Umgebungsluft in fluidleitendem Austausch stehende Detektionskammer. Der tatsächliche Detektionsbereich, innerhalb dessen mit der Umgebungsluft in die Detektionskammer transportierte Partikel erfasst werden können, wird üblicherweise durch Überlagerung des Lichts des Lichtsenders und des Einfallsbereichs des Lichtempfängers innerhalb der Detektionskammer definiert. Bei der Detektion werden die Partikel durch die vom Lichtsender ausgesendeten Lichtstrahlen angestrahlt und können entweder anhand des durch die Partikel reduzierten Durchlichts (Durchlichtdetektor) oder aber anhand des an den Partikeln gestreuten Streulichts (Streulichtdetektor) vom Lichtempfänger erkannt werden. Um sicherzustellen, dass ausschließlich das vom Lichtsender gesendete Licht die im Detektionsbereich befindlichen Partikel erreicht, ist die Detektionskammer von Umgebungslicht abgeschirmt.

Ein bekannter Anwendungsfall für die Verwendung von Partikeldetektionseinheiten sind Ansaugrauchmelder, auch als Ansaugpartikelerkennungssysteme bezeichnet. Ein Streulichtdetektor für ein solches Ansaugpartikelerkennungssystem ist beispielsweise aus der europäischen Patentschrift EP 1 709 428 B1 bekannt. Der Streulichtdetektor umfasst eine Lichtquelle und einen Streulichtempfänger, die zusammen innerhalb eines Gehäuses mit einer Einlassöffnung und einer Auslassöffnung angeordnet sind. Zwischen den beiden Öffnungen durchströmt das Trägermedium, zumeist Umgebungsluft, das Gehäuse entlang eines Strömungspfads. Um die vom Gehäuse begrenzte Detektionskammer möglichst vollständig von Umgebungslicht abzuschirmen, wird vorgeschlagen, einen den Strömungspfad leitenden Strömungskanal mit zwei Biegungen, einer Biegung vor, und einer Biegung hinter dem hier als Streulichtzentrum bezeichneten Detektionsbereich zu gestalten. Die Biegungen wirken als Lichtfallen und verhindern das Eindringen von äußerem Fremdlicht ins Innere der Detektionskammer. Darüber hinaus sind im Inneren des Gehäuses insgesamt noch drei Blenden angeordnet, jeweils als gerade verlaufende Wandung ausgebildet, die zur Abschirmung des Lichtempfängers gegenüber dem von der Lichtquelle emittierten Licht fungieren, sodass ausschließlich das an im Detektionsbereich enthaltenen Partikeln gestreute Streulicht in den Einfallsbereich des Lichtempfängers gelangt.

Das Ansaugpartikelerkennungssystem umfasst außerdem mindestens eine Rohr- und/oder Schlauchleitung, die über eine oder mehrere Ansaugöffnungen zur jeweiligen Entnahme einer Fluidprobe, insbesondere einer Luftprobe, in einen oder mehrere Überwachungsbereiche mündet. Mehrere Überwachungsbereiche können zum Beispiel in unterschiedlichen Bereichen desselben Raums, wie einer (großen) Lagerhalle angeordnet sein, aber auch in jeweiligen Räumen eines Gebäudes oder Abschnitten eines Fahrzeugs, wie den Fahrgastkabinen eines Schiffes. Die entnommenen Fluidproben werden entlang der Rohr- und/oder Schlauchleitung zur Partikeldetektionseinheit transportiert und in die Detektionskammer eingeleitet, indem die Rohr- und/oder Schlauchleitung mit deren Einlassöffnung verbunden ist. Ein typischerweise bei Ansaugpartikelerkennungssystemen auftretendes Problem ist, dass in der kontinuierlich angesaugten und in die Detektionskammer eingeleiteten Luft, auch dann, wenn kein Brandfall vorliegt, Partikel und/oder Aerosole wie Staub, Schmutz usw. enthalten sind, die über längere Betriebsdauern hinweg zu Verschmutzungen der optischen Komponenten und so zu einer Abnahme der Detektionsleistung führen.

Aus dem Stand der Technik, nämlich den Offenlegungsschriften EP 4 099 285 A1 und EP 4 099 286 A1 ist ein solches aspiratives Branderkennungssystem mit zwei Rohrleitungen und einem hier als Ansaugraucherkennungsgerät bezeichneten Grundgerät bekannt. Das Grundgerät umfasst eine gedruckte Leiterplatte (PCB = Printed Circuit Board) und einen sogenannten Verteiler, der die modulare Verwendung von wahlweise einem oder zwei Sensorköpfen ermöglicht. Als Sensorköpfe sollen bspw. auf dem Streulichtprinzip basierende Partikeldetektionseinheiten verwendet werden. Im Betrieb wird durch den im Lüftergehäuse des Grundgeräts platzierten Lüfter ein Unterdruck erzeugt, sodass Luft entlang der Rohrleitungen zunächst ins Grundgerät angesaugt und dann in die jeweilige Detektionskammer des Sensorkopfgehäuses geleitet wird. Über einen Auslass des Lüftergehäuses, kann die angesaugte Luft wieder in die Umgebung austreten. Mittels eines Filters sollen ferner Schmutz und Staub aus der über die Einlässe der Sensorkopfgehäuse angesaugten Luft herausgefiltert werden. Um sicherzustellen, dass etwaige, zur Branderkennung erforderliche Rauchpartikel auch weiterhin in ausreichendem Maße zu den Sensorköpfen gelangen, filtert ein solcher Grobfilter allerdings lediglich gröbere Schmutz- oder Staubpartikel heraus. In der angesaugten Luft enthaltene, feine Staubpartikel oder auch Aerosole können weiterhin zu einer schleichenden Verschmutzung der optischen Komponenten, insbesondere des Lichtsenders und des Lichtempfängers führen.

Auch aus der WO 97/42486 A1 ist ein ähnliches Ansaugpartikelerkennungssystem zur Branderkennung mit mehreren Probenahmeleitungen bekannt. Die Probenahmeleitungen führen zu einem Einlassverteiler eines gemeinsamen Grundgeräts, welches außerdem noch ein Ansauggerät, einen Filter und einen Rauchdetektor in Form einer Partikeldetektionseinheit umfasst. Das Ansauggerät erzeugt eine Strömung, wodurch Luft über die Probenahmeleitungen angesaugt, im Filter grobgefiltert und zur Erkennung etwaiger darin enthaltener Rauchpartikel dem Rauchdetektor zugeführt wird. Der Rauchdetektor umfasst eine zylindrische Detektionskammer, in deren einem Ende ein Lichtsender, nämlich eine LASER Diode zur Erzeugung eines die Detektionskammer in axialer Richtung durchsetzenden Lichtstrahls, und in deren anderem Ende ein den Lichtstrahl absorbierender Lichtabsorber angeordnet ist. Ein Strömungseinlass und ein Strömungsauslass der Detektionskammer sind an deren Mantelfläche, einander gegenüberliegend ausgebildet, sodass die über die Probenahmeleitungen angesaugte Luft radial in die zylindrische Detektionskammer eintritt und den Lichtstrahl ohne weitere Umlenkungen durchströmend, an der gegenüberliegenden Seite auch wieder radial austritt. Zur Partikeldetektion ist ein Photodetektor einen Streulichtwinkel mit dem Lichtstrahl einschließend ebenfalls innerhalb der Detektionskammer positioniert, sodass an in der dort befindlichen Luft enthaltenen Rauchpartikeln gestreute Lichtstrahlen von diesem erfasst werden können.

Um zu verhindern, dass auch nach der Grobfilterung in der kontinuierlich angesaugten und der Detektionskammer zugeführten Luftströmung noch enthaltene, feine Schmutz- und/oder Staubpartikel, zu den optischen Komponenten gelangen und dort zu Verschmutzungen führen, schlägt die WO 97/42486 A1 außerdem einen Feinfilter vor, der einen Teil der über die Probenahmeleitungen angesaugten Luft möglichst vollständig von Partikeln reinigen soll. Diese gereinigte Luft wird über separate Einlässe ebenfalls in die Detektionskammer eingeblasen, und zwar im Bereich der dortigen optischen Komponenten, wie Lichtsender, Lichtabsorber und Photodetektor. Auf diese Weise soll die grob gefilterte und auf Partikel zu untersuchende Luftströmung von den optischen Komponenten ferngehalten werden. Die vorgeschlagene Lösung ist vergleichsweise kompliziert umzusetzen, da mehrere zusätzliche Luftdüsen an der Detektionskammer vorgesehen werden müssen. Darüber hinaus müssen die Strömungsparameter, mit der die gereinigte Luft in die Detektionskammer eingeblasen wird, exakt eingestellt und kontinuierlich nachgeregelt werden, um den für die Partikeldetektion erforderlichen Luftstrom der grob gefilterten Luft nicht zu beeinträchtigen.

Neben der Verwendung von Filtern ist auch bekannt, die Strömungsparameter von partikelbeladenen Strömungen, bspw. mittels sogenannter Partikelabscheider zu beeinflussen, um die Menge der in der Fluidströmung enthaltenen Partikel zu vermindern oder bestimmte Partikel aus der Fluidströmung abzuscheiden. Ein Partikelabscheider macht sich dabei die Masse oder Trägheit der in der Strömung enthaltenen Partikel zunutze, wobei sich durch Änderung der Strömungsparameter, wie An- und Abströmwinkel, Strömungsgeschwindigkeit, Strömungsrichtung, die Erzeugung von turbulenten oder laminaren Bereichen usw. der Weg der in der Strömung mitgeführten Partikel beeinflussen lässt. Bekannte technische Umsetzungen sind Fliehkraftabscheider, insbesondere Zyklone, bei denen die Strömung in Rotation versetzt wird, und sogenannte Trägheitsabscheider, bei denen die Strömung umgelenkt wird.

Die internationale Offenlegungsschrift WO 2010/100549 offenbart gleich mehrere Umsetzungen einer sogenannten Abzweigkammer, die einen Teil der in der über ein Ansaug-Brandmeldesystem angesaugten Luft enthaltenen Partikel separieren soll, sodass nur jener Teil mit den gewünschten Zielpartikeln in die Messkammer der Detektionseinheit gelangt und Verschmutzungen der optischen Komponenten durch den anderen Teil vermieden werden. Bei einer Umsetzung ist die Abzweigkammer als Zyklon konstruiert, sodass die Partikelseparierung durch Zentrifugalkräfte erfolgt. Bei einer anderen Umsetzung soll die Partikelseparierung durch Beschleunigung der Strömung und anschließende Verzögerung hervorgerufen werden. Dabei wird die angesaugte Luft über einen Eintrittskanal in die Abzweigkammer eingeleitet. Der Eintrittskanal ist als Düse gestaltet, mit einem sich in Richtung der Abzweigkammer verjüngenden Querschnitt, sodass zunächst eine Beschleunigung der in die Abzweigkammer einströmenden Luft erfolgt. Wegen der Querschnittsvergrößerung der Abzweigkammer verringert sich die Geschwindigkeit des Luftstroms anschließend wieder, wobei die Verzögerung der enthaltenen größeren Partikel geringer ist als die der kleineren Partikel. In der Folge lassen sich die kleineren Partikel leichter ablenken und werden über einen Abzweigkanal zum Strömungseinlass der Detektionskammer geführt. Der Abzweigkanal ist näherungsweise kreisbogenförmig, abgerundete Übergänge sollen Luftverwirbelungen und Druckverluste vermeiden. Nachteilig an den vorgeschlagenen Umsetzungen ist der hohe konstruktive Aufwand und Platzbedarf innerhalb des Grundgeräts, welches neben dem Lüfter und der Partikeldetektionseinheit nämlich auch noch die Abzweigkammer aufnehmen muss.

Ein Aerosolphotometer zur quantitativen Bestimmung von im Messvolumen enthaltenen Aerosol-Partikeln ist in der deutschen Offenlegungsschrift DE 10 2017 001 436 A1 näher beschrieben. Der Photometer funktioniert nach dem Streulichtprinzip, entsprechend sind Lichtquelle und Lichtempfänger einen Streulichtwinkel einschließend zueinander ausgerichtet. Die das zu messende Aerosol enthaltende Gasströmung wird durch ein Fördermittel erzeugt und verläuft in gerader Richtung zwischen der Lichtquelle und dem Lichtempfänger, das dortige Messvolumen querend. Gerade bei langen Betriebszeiten ist die Wahrscheinlichkeit von Verschmutzungen der optischen Komponenten durch Aerosolablagerungen groß, was zu fehlerhaften Messungen führen kann. Um derartige Ablagerungen zu vermeiden, soll die Fördermenge der Fördereinrichtung im Betrieb variiert werden. Demnach wird bei hohen Massenkonzentrationen die Fördermenge reduziert. Eine solche Lösung ist jedoch nicht zur kontinuierlichen Brandüberwachung geeignet, bei der die Massenkonzentration der in der zur Überwachung angesaugten Luft nicht bekannt ist. Eine erhöhte Massenkonzentration von bspw. Rauchpartikeln, liegt nämlich gerade im zu erkennenden Brandfall vor, und fungiert folglich als die zu detektierende Brandkenngröße.

Die US-Patentschrift US 9,075,007 B2 offenbart einen Ansaugrauchmelder mit einem Ansauglüfter, und einem optischen Detektionskammermodul sowie einem in das Detektionskammermodul führenden Luftkanal. Um den Ansaugrauchmelder auch in Umgebungen mit besonders hohem Partikelaufkommen, wie bspw. im Bergbau, verwenden zu können soll ein Teil der in der angesaugten Luft enthalten Staubpartikel abgetrennt werden, noch bevor die Luft in das Detektionsmodul eintritt. Hierzu ist der Luftkanal U-förmig, mit 90°-Kehren konfiguriert. Die plötzliche Änderung der Strömungsrichtung soll dafür sorgen, dass sich schwerere Partikel aus dem Luftstrom abtrennen und sich in einer dazu vorgesehen Staubkammer ansammeln. Auch diese Lösung erfordert einen hohen Platzbedarf, da sowohl der U-förmige Luftkanal als auch die Staubkammer zusätzlich innerhalb des Grundgeräts untergebracht werden müssen.

Aus anderen technischen Bereichen ist es bekannt, die Strömungsparameter von Fluidströmungen durch Einbauten oder Bauteile wie Leitbleche oder Spoiler zu beeinflussen. Bspw. ist in der deutschen Offenlegungsschrift DE 10 2020 114 720 A1 eine Abscheideeinrichtung für einen Zyklonsauger offenbart, bei dem während des Saugbetriebs sauggutbeladene Luft durch eine Saugdüse in die zylindrische Abscheidetrommel eingesaugt wird. Im Partikelluftstrom enthaltene Sauggutpartikel werden in Umfangsrichtung der Abscheidetrommel abgeschieden, der Partikelluftstrom verlässt die Abscheidetrommel anschließend tangential. Am Partikelaustrittsweg ist außerdem ein als Leitblech ausgebildeter Spoiler vorgesehen, der die Behälteröffnung eines Grobgutauffangbehälters zumindest teilweise verdeckt und so den Trennmechanismus von Partikeln und Luft beeinflussen soll. Die Ausrichtung bzw. der Winkel des Spoilers sollen nämlich die Strömungsparameter des Partikelluftstroms und somit die Abscheiderate steuern.

Durch das Abscheiden oder Herausfiltern von in den zu untersuchenden Luftproben enthaltenen Partikeln ist im Stand der Technik insgesamt nachteilig, dass deren Konzentration oder Menge verringert wird. Für die Nutzung von Partikeldetektionseinheiten, insbesondere zur Branderkennung wird dadurch nicht nur die Detektionsschwelle erhöht, sondern auch die Detektionsempfindlichkeit verringert, d. h. dass die zur Erkennung von Rauchpartikeln erforderliche Konzentration steigt, wodurch Brände erst später erkannt werden können. Viele der im Stand der Technik beschriebenen Lösungen sind außerdem aufwendig zu konstruieren und/oder haben einen hohen Platzbedarf.

Es ist die Aufgabe der vorliegenden Erfindung, die Nachteile aus dem Stand der Technik zu eliminieren und eine Partikeldetektionseinheit zu schaffen, die zur Verwendung mit einem Ansaugpartikelerkennungssystem ausgebildet ist, und die einer schleichenden Verschmutzung der optischen Komponenten, insbesondere des Lichtsenders und des Lichtempfängers zuverlässig, mit nur geringem Konstruktionsaufwand, bei wenig Platzbedarf und gleichzeitig hoher Detektionsgenauigkeit vorbeugt.

Die Aufgabe wird gelöst durch eine zur Verwendung mit einem Ansaugpartikelerkennungssystem ausgebildete Partikeldetektionseinheit gemäß Anspruch 1.

Eine Partikeldetektionseinheit der eingangs näher beschriebenen Art kennzeichnet sich dadurch, dass die Partikeldetektionseinheit mindestens ein, insbesondere ein verschmutzungsminderndes Strömungsleitbauteil zur Umlenkung einer über den Strömungseinlass eintretenden Fluidströmung in Richtung des Strömungsauslasses aufweist. Das Strömungsleitbauteil ist innerhalb der Detektionskammer im Bereich der Fluidströmung, zwischen dem Strömungseinlass und dem Strömungsauslass, jedoch außerhalb des Detektionsbereichs positioniert.

Anders als im Stand der Technik, wonach verschmutzungsmindernde Mittel wie Abscheider oder Filter, die einen Teil der in der Fluidströmung enthaltenen Partikel abscheiden oder herausfiltern, außerhalb der Detektionskammer angeordnet sind, befindet sich gemäß der vorliegenden Erfindung das verschmutzungsmindernde Strömungsleitbauteil innerhalb der Detektionskammer.

Verschmutzungen der optischen Komponenten, insbesondere des Lichtsenders und des Lichtempfängers, werden dabei nicht durch Verringerung der in die Detektionskammer eintretenden Partikelmenge vermieden, sondern indem die über den Strömungseinlass einströmende Fluidströmung in Richtung des Strömungsauslasses umgelenkt wird. Hierbei schirmt das Strömungsleitbauteil die optischen Komponenten vor einer direkten Anströmung ab, wodurch eine Anlagerung von in der Fluidströmung mitgeführten Partikeln, insbesondere im Bereich des Lichtsenders und/oder des Lichtempfängers vermieden wird. Dies wiederum beugt Verschmutzungen vor und erhöht letztlich die Zeitabstände zwischen erforderlichen Wartungsarbeiten und die Betriebsdauer der Partikeldetektionseinheit.

Die Fluidströmung soll möglichst ungehindert an den optischen Komponenten "vorbei" geführt werden, sodass mit der Fluidströmung in die Detektionskammer eingetragene Partikel mit dieser auch wieder, über den Strömungsauslass, aus der Detektionskammer heraustransportiert werden. Um die Funktion der Partikeldetektion selbst nicht zu behindern, d. h. die Detektion von Streulicht oder Durchlicht durch den Lichtempfänger ungehindert zu ermöglichen, ist das Strömungsleitbauteil außerhalb des Detektionsbereichs positioniert.

Durch die erfindungsgemäße Lösung wird die Anlagerung von Partikeln im gesamten Bereich der Detektionskammer und insbesondere im Bereich des Lichtsenders und/oder des Lichtempfängers und/oder (weiterer) optischer Komponenten vermindert, ohne die Konzentration oder Menge von in der Fluidströmung enthaltenen und zu detektierenden Partikeln, wie bspw. Rauchpartikel oder Rauchaerosole in einer die Detektionsgenauigkeit beeinflussenden Weise zu verringern.

Nach einer vorteilhaften Ausführungsform der Erfindung ist das Strömungsleitbauteil mit mindestens einer in Richtung des Strömungseinlasses und/oder des Strömungsauslasses gerichteten und gekrümmten Fluidleitfläche ausgebildet.

Zum Beispiel kann das Strömungsleitbauteil konstruktiv als gekrümmte, insbesondere ein Querschnittsprofil in Form eines Ringsegments aufweisende Innenwandung der Detektionskammer ausgeführt sein. Die dem Innenradius des Ringsegments folgende, gekrümmte Innenfläche weist dann in Richtung des Strömungseinlasses und/oder des Strömungsauslasses und fungiert als Fluidleitfläche, sodass eine über den Strömungseinlass in die Detektionskammer einströmende Fluidströmung diese Fluidleitfläche in einer Anströmrichtung anströmt, durch deren Krümmung umgelenkt wird, und in einer Abströmrichtung von der Fluidleitfläche, in Richtung des Strömungsauslasses abströmt. Bspw. liegt der Radius der Krümmung in einem Bereich zwischen 4 mm und 8 mm und beträgt bevorzugt in etwa 6 mm.

In beispielhafter Weiterbildung weist die gekrümmte Fluidleitfläche des Strömungsleitbauteils ferner eine in Richtung des Strömungseinlasses weisende Anströmkante und/oder eine in Richtung des Strömungsauslasses weisende Abströmkante auf.

Vorzugsweise sind die Anström- und/oder Abströmkante konstruktiv von der gekrümmten Fluidleitfläche des Strömungsleitbauteils abgesetzt und weisen jeweilige, einem geraden Verlauf folgende Fluidleitflächen auf. Insbesondere die Abströmkante kann dabei maßgeblich zur Beeinflussung der Strömungsparameter beitragen. Bspw. kann an der Abströmkante ein sogenannter Strömungsabriss erzeugt werden, bei dem sich die Fluidströmung von der gekrümmten Fluidleitfläche löst, wodurch außerhalb der Hauptströmung Bereiche mit deutlich verminderter Strömungsgeschwindigkeit und/oder Verwirbelungen und/oder von der Richtung der Hauptströmung abweichenden Strömungsrichtungen resultieren. In beispielhafter Ausführung liegt der Winkel der An- und/oder Abströmkante in einem Bereich zwischen 35° bis 55° und beträgt bevorzugt etwa 45°.

Vorzugsweise sind der Lichtsender und/oder der Lichtempfänger in einem solchen Bereich, also außerhalb der der Abströmrichtung folgenden Hauptströmung positioniert, wodurch die maßgeblich in der Hauptströmung mitgeführten Partikel am Lichtsender und/oder Lichtempfänger vorbei und aus der Detektionskammer heraus transportiert werden.

Besonders vorteilhaft ist nach einer Erfindungsvariante, dass der Lichtsender und/oder der Lichtempfänger innerhalb von jeweiligen Totzonen angeordnet sind, die durch Umlenkung der Fluidströmung mittels des Strömungsleitbauteils innerhalb der Detektionskammer gebildet werden.

Als Totzone werden Bereiche außerhalb der Hauptströmung, mit deutlich verminderter Strömungsgeschwindigkeit und/oder Verwirbelungen und/oder von der Richtung der Hauptströmung abweichenden Strömungsrichtungen bezeichnet, die vorzugsweise durch bauliche Begrenzungen, wie Einbauten oder Wandungen der Detektionskammer begrenzt sind. Derartige Totzonen können also durch die mit der Fluidströmung zusammenwirkende Geometrie der Detektionskammer und/oder des Strömungsleitbauteils an festgelegten Positionen innerhalb der Detektionskammer erzeugt werden.

Zum Beispiel kann das Strömungsleitbauteil in Strömungsrichtung vor dem Lichtsender positioniert sein, wodurch die Fluidströmung umgelenkt und deren Hauptströmung am Lichtsender vorbeigeführt wird. Letzterer befindet sich im "Strömungsschatten" oder Lee, also einem Bereich mit gegenüber der Hauptströmung deutlich reduzierter Strömungsgeschwindigkeit. Dieser Bereich ist wiederum von entsprechenden Innenwandungen der Detektionskammer begrenzt, sodass durch Anstauung des einströmenden Fluids eine Art "Luftpolster" oder Gegenströmung entsteht, welches bzw. welche den Eintrag und folglich auch die Anlagerung von in der Fluidströmung enthaltenen Partikeln innerhalb der so gebildeten Totzone vermindert. Aufgrund der deutlich höheren Strömungsgeschwindigkeit verbleiben die Partikel nämlich größtenteils in der Hauptströmung und werden mit dieser über den Strömungsauslass aus der Detektionskammer heraus transportiert.

Nach einer Variante der Erfindung sind der Strömungseinlass und der Strömungsauslass durch einen den Detektionsbereich durchsetzenden und von die Fluidströmung leitenden Fluidleitflächen begrenzten Strömungskanal miteinander verbunden. Die Fluidleitflächen müssen den Strömungskanal dabei nicht unbedingt vollständig begrenzen, denkbar ist auch eine teilweise oder bereichsweise Begrenzung. In diesem Fall ist die Detektionskammer innerhalb der Partikeldetektionseinheit also durch die Fluidleitflächen des Strömungskanals begrenzt bzw. entspricht der Strömungskanal der Detektionskammer. Um die Anlagerung von Partikeln und somit von Verschmutzungen im Strömungskanal bzw. in der Detektionskammer zu reduzieren kann der Strömungskanal einen runden, in etwa kreisförmigen, oder auch einen eckigen Strömungsquerschnitt mit abgerundeten Ecken aufweisen.

Vom Strömungseinlass zum Strömungsauslass kann der Strömungskanal in beispielhafter Variante einem in etwa U-förmigen Verlauf folgend ausgebildet sein, wodurch eine am Strömungseinlass eintretende Fluidströmung um etwa 180° umgelenkt und in Richtung des Strömungsauslasses geführt wird. Indem eine oder mehrere äußere, d.h. am Außenradius des U-förmigen Verlaufs liegende, und eine oder mehrere innere, d.h. am Innenradius des U-förmigen Verlaufs liegende, Fluidleitflächen gekrümmt oder gebogen sind, insbesondere einen Krümmungsradius aufweisen, lässt sich der Strömungswiderstand innerhalb des Strömungskanals reduzieren. Vorzugsweise ist der Querschnitt entlang des gesamten Strömungskanals nahezu identisch und entspricht dem Durchmesser eines Ansaugrohrs, wodurch nicht nur der Strömungswiderstand weiter reduziert wird, sondern auch Stromverbrauch und Geräuschentwicklung des Lüfters. Durch den Strömungskanal kann die Fluidströmung dann mit möglichst konstanter Geschwindigkeit ungehindert vom Strömungseinlass zum Strömungsauslass strömen. Hierdurch werden Partikelanlagerungen innerhalb der Detektionskammer vermieden bzw. werden die mit der Fluidströmung in die Detektionskammer eingetragenen Partikel zum überwiegenden Anteil von dieser auch wieder ungehindert aus der Detektionskammer heraustransportiert.

In Abhängigkeit vom Verlauf des Rohr- und/oder Schlauchsystems eines an die Partikeldetektionseinheit angeschlossenen Ansaugpartikelerkennungssystems, liegen übliche Strömungsgeschwindigkeiten am Strömungseinlass der Partikeldetektionseinheit im Bereich von ca. 1 m/s bis 4 m/s. Die Geometrie des Strömungsleitbauteils und/oder des Strömungskanals sind vorzugsweise für diesen gesamten Strömungsgeschwindigkeitsbereich ausgelegt, sodass die Anlagerung von Partikeln im Bereich des Lichtsenders und/oder des Lichtempfängers auch im gesamten Strömungsgeschwindigkeitsbereich deutlich vermindert wird.

Die exakte Geometrie des Strömungsleitbauteils und/oder des Strömungskanals kann anhand von Strömungssimulationen ermittelt werden, wobei die Strömungsgeschwindigkeit der Hauptströmung im obigen Geschwindigkeitsbereich liegend festgelegt wird. Die Simulationen können dann für unterschiedliche Geometrien durchgeführt und die sich daraus ergebenden Strömungsprofile ausgewertet werden. Der Zusammenhang zwischen dem Strömungsprofil, insbesondere den in einzelnen Bereichen vorliegenden Strömungsgeschwindigkeiten bzw. -richtungen und dem durch Partikelablagerungen verursachten Verschmutzungsgrad kann experimentell ermittelt werden. Dabei zeigen sich zwei vorherrschende Effekte. Zum einen können innerhalb von Totzonen, also Bereichen mit deutlich reduzierter Strömungsgeschwindigkeit und abweichender Strömungsrichtung nahezu keine Partikel nachgewiesen werden, wodurch Verschmutzungen der darin angeordneten optischen Komponenten erheblich reduziert werden. Zum anderen verhindert die konstant schnelle Strömungsgeschwindigkeit im Bereich der Hauptströmung eine Anlagerung von Partikeln an den dortigen Wandungen.

Ähnlich, wie bereits im Zusammenhang mit dem Strömungsleitbauteil beschrieben, können auch die Fluidleitflächen des Strömungskanals, insbesondere die am Außenradius liegenden, gekrümmten Fluidleitflächen eine Anströmkante und/oder eine Abströmkante aufweisen. Insbesondere an der Abströmkante kann ein Strömungsabriss, und folglich außerhalb der Hauptströmung ein Bereich mit deutlich verminderter Strömungsgeschwindigkeit und/oder von der Richtung der Hauptströmung abweichenden Strömungsrichtungen erzeugt werden, wobei die Hauptströmung selbst möglichst laminar und mit konstanter Geschwindigkeit weitergeführt wird. Im Bereich der deutlich verminderten Strömungsgeschwindigkeit können dann wiederum optische Komponenten, insbesondere der Lichtsender und/oder der Lichtempfänger positioniert sein.

In Weiterbildung der zuvor beschriebenen Varianten sind der Strömungseinlass und der Strömungsauslass auf derselben Seite des Gehäuses der Partikeldetektionseinheit zueinander benachbart angeordnet. Bei einer Streulichtkonfiguration können dann der Lichtsender in etwa dem Strömungseinlass und der Lichtempfänger in etwa dem Strömungsauslass (oder umgekehrt) gegenüberliegen. Lichtsender und Lichtempfänger schließen den für die Detektion einer oder mehrerer bestimmter Partikelarten spezifischen Streulichtwinkel miteinander ein.

Dabei ist es vorteilhaft, wenn der Strömungseinlass am ersten Schenkel, der Strömungsauslass am zweiten Schenkel und der Lichtsender, der Lichtempfänger sowie das Strömungsleitbauteil im dazwischenliegenden, mittleren Bereich des in etwa U-förmig verlaufenden Strömungskanals angeordnet sind. Das Strömungsleitbauteil bzw. dessen gekrümmte Fluidleitfläche kann dann nämlich als Teil des Strömungskanals fungieren.

Vorteilhafterweise können die inneren und äußeren Fluidleitflächen des Strömungskanals mit dem Strömungsleitbauteil zusammenwirken, um die den Strömungskanal durchströmende Fluidströmung am Lichtsender und/oder Lichtempfänger vorbeizuführen und so eine Anlagerung von darin enthaltenen Partikeln im Innern der Detektionskammer, insbesondere im Bereich des Lichtsenders und/oder des Lichtempfängers zu vermeiden.

In optionaler Ausführung der Erfindung ist die Partikeldetektionseinheit als Streulichtdetektor konfiguriert, wobei der Lichtsender und der Lichtempfänger einen Streulichtwinkel miteinander einschließend ausgerichtet sind, und das Strömungsleitbauteil zwischen dem Lichtsender und dem Lichtempfänger, jedoch außerhalb des von dem Lichtsender gesendeten Lichts und außerhalb des Einfallsbereichs des Lichtempfängers positioniert ist.

Um den Lichtempfänger vor unerwünschtem Licht zu schützen, welches z.B. an Gehäuseinnenflächen reflektiert wird, oder auch, im Falle einer Streulichtkonfiguration direkt vom Lichtsender kommen kann, weist nach einer beispielhaften Erfindungsvariante die Partikeldetektionseinheit im Bereich des Lichtsenders und/oder im Bereich des Lichtempfängers eine Blende auf, die den Lichtempfänger, gegenüber dem vom Lichtsender gesendeten und insbesondere nicht an im Detektionsbereich befindlichen Partikeln gestreuten Licht, abschirmt.

Die Blende kann zum Beispiel als eine eine Ausnehmung oder Öffnung aufweisende, Innenwandung der Detektionskammer ausgebildet sein, die unmittelbar vor dem Lichtsender und/oder dem Lichtempfänger angeordnet ist. Der Bereich des vom Lichtsender gesendeten Lichts und der Einfallsbereich des Lichtempfängers werden dann, u. a. durch die Geometrie der Ausnehmung oder Öffnung begrenzt. Um den Lichtverlauf nicht unnötig zu beeinflussen und so die Detektionsleistung zu stören, ist die Ausnehmung oder Öffnung der Blende vorzugsweise "offen", d. h. nicht durch Fensterglas, Linsen oder sonstige Bauteile mit von der Umgebungsluft abweichender Dichte verschlossen. Folglich sind der Lichtsender und/oder der Lichtempfänger fluidleitend mit der Detektionskammer verbunden.

Nach einem bevorzugten Erfindungsbeispiel weist die Partikeldetektionseinheit im Bereich des Lichtsenders und/oder des Lichtempfängers eine Blende auf, die zur Vermeidung von Anlagerungen von in der Fluidströmung enthaltenen Partikeln im Bereich des Lichtsenders und/oder des Lichtempfängers doppelwandig mit einer die jeweilige Wandung durchsetzenden Ausnehmung oder Öffnung ausgeführt ist. Durch die doppelwandige Konstruktion wird der Partikeleintrag zum Lichtsender und/oder zum Lichtempfänger erheblich reduziert. Die zur Detektionskammer bzw. der darin verlaufenden Fluidströmung ausgerichtete, vordere Wandung der Blende kann dabei optional als zusätzliche Fluidleitfläche fungieren.

Nach einem anderen Ausführungsbeispiel umfasst die Partikeldetektionseinheit eine das Gehäuse gemeinsam bildende Oberschale und eine Unterschale, wobei jeweilige Bauteile, insbesondere das mindestens eine Strömungsleitbauteil und/oder die den Strömungskanal begrenzenden Fluidleitflächen und/oder die im Bereich des Lichtsenders und/oder des Lichtempfängers angeordnete Blenden zweiteilig, durch die Oberschale und die Unterschale gemeinsam gebildet ausgeführt sind.

Alternativ oder optional kann die Partikeldetektionseinheit als einstückiges Spritzgussteil, insbesondere einstückig mit dem mindestens einen Strömungsleitbauteil, den den Strömungskanal begrenzenden Fluidleitflächen und/oder den im Bereich des Lichtsenders und/oder des Lichtempfängers angeordnete Blenden hergestellt sein. Sofern das Gehäuse zweiteilig, also mit Ober- und Unterschale ausgeführt ist, sind entsprechend die Ober- bzw. Unterschale jeweils einstückig, im Spritzgussverfahren hergestellt.

Weitere Einzelheiten, Merkmale, Merkmals(unter)kombinationen, Vorteile und Wirkungen auf Basis der Erfindung ergeben sich aus der nachfolgenden Beschreibung eines bevorzugten Ausführungsbeispiels der Erfindung und den Zeichnungen. Diese zeigen in
- Fig. 1: eine perspektivische Darstellung einer beispielhaften Ausführungsform der erfindungsgemäßen Partikeldetektionseinheit mit einem Strömungsleitbauteil,
- Fig. 2: einen Ausschnitt der Figur 1, der das Strömungsleitbauteil in einer Einzelansicht zeigt,
- Fig. 3: eine Ansicht der Partikeldetektionseinheit aus Figur 1, von oben und mit schematisch anhand von Pfeilen angedeuteter Fluidströmung, und in
- Fig. 4: eine schematische Darstellung des Strömungsprofils innerhalb der Detektionskammer einer Partikeldetektionseinheit gemäß der Figur 3.

Die Figuren sind lediglich beispielhafter Natur und dienen nur dem Verständnis der Erfindung. Die gleichen Elemente sind mit denselben Bezugszeichen versehen.

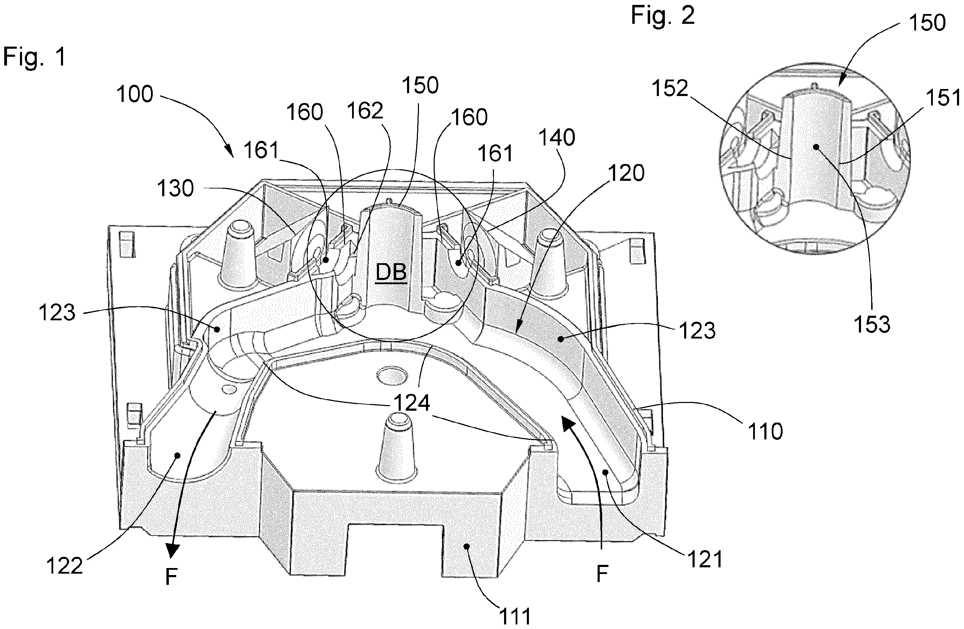

Die Figur 1 zeigt eine perspektivische Darstellung einer beispielhaften Ausführungsform der erfindungsgemäßen Partikeldetektionseinheit 100. In dieser Ausführungsform ist das Gehäuse 110 der Partikeldetektionseinheit 100 zweiteilig, mit einer Unterschale und einer Oberschale ausgeführt. Gezeigt ist hier nur die Oberschale, um einen Blick ins Innere des Gehäuses 110 zu ermöglichen. Das Gehäuse 110 begrenzt eine darin angeordnete und von Umgebungslicht abschirmte Detektionskammer 120, die einen Strömungseinlass 121 und einen Strömungsauslass 122 umfasst. Der Strömungseinlass 121 und der Strömungsauslass 122 sind an einer gemeinsamen Seite, nämlich der Vorderseite 111 des Gehäuses 110 zueinander benachbart angeordnet. Der Strömungseinlass 121 und der Strömungsauslass 122 sind durch die Detektionskammer 120 fluidleitend miteinander verbunden, sodass eine anhand der dargestellten Pfeile schematisch angedeutete Fluidströmung F über den Strömungseinlass 121 in die Detektionskammer 120 eintreten und über den Strömungsauslass 122 aus der Detektionskammer 120 austreten kann.

Im vorliegend dargestellten Ausführungsbeispiel ist die Detektionskammer 120, als ein in etwa U-förmig verlaufender Strömungskanal 120 konstruiert, der durch Fluidleitflächen begrenzt ist. Einige der Fluidleitflächen folgen einem geraden Verlauf, darüber hinaus umfasst der Strömungskanal mehrere gekrümmte äußere, am Außenradius des U-förmigen Verlaufs liegende Fluidleitflächen 123, und mehrere gekrümmte innere Fluidleitflächen 124, die am Innenradius des U-förmigen Verlaufs liegen. Die gekrümmten Fluidleitflächen 123, 124 tragen nicht nur zur Führung der Fluidströmung F, sondern auch zur Beeinflussung des Strömungswiderstands bei, wobei ein konstant verlaufender, großer Radius eine langsame Richtungsänderung mit geringem Strömungswiderstand bewirkt. Durch die Vermeidung von Kanten im Strömungsquerschnitt wird die Anlagerung von in der Fluidströmung F enthaltenen Partikeln im Bereich des Strömungskanals 120 vermindert.

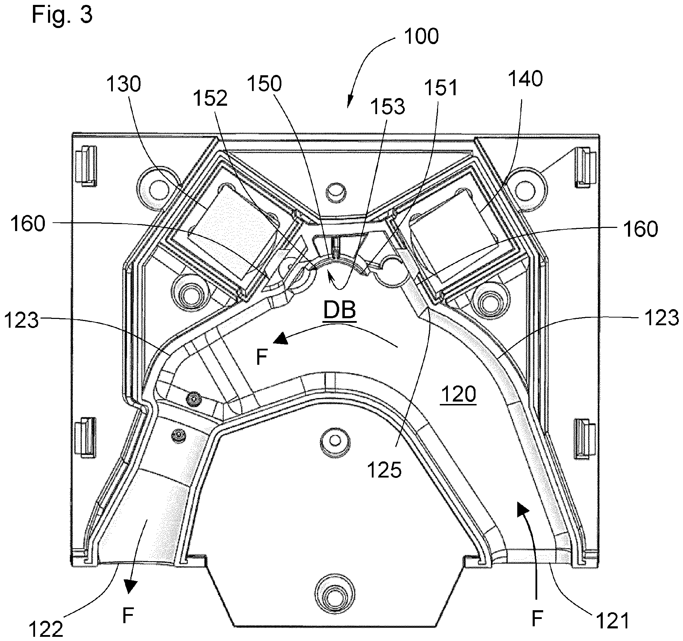

Der Strömungseinlass 121 schließt an den ersten Schenkel und der Strömungsauslass 122 an den zweiten Schenkel an. Im dazwischenliegenden, mittleren Bereich des U-förmigen Verlaufs befinden sich die zur Detektion von Partikeln erforderlichen optischen Komponenten, der Lichtsender 130 und der Lichtempfänger 140. Im einfachsten Fall können der Lichtsender 130 und der Lichtempfänger 140 z. B. eine einzelne Leuchtdiode (LED) und eine einzelne Photodiode (PD) sein. Im hier gezeigten Ausführungsbeispiel sind jeweils weitere optische Komponenten in Form jeweiliger Prismen und Linsen enthalten, die den Lichtverlauf beeinflussen und so die Definition des Detektionsbereichs DB durch Überlagerung des vom Lichtsender 130 gesendeten Lichts und des Einfallsbereichs des Lichtempfängers 140 (s. auch Figur 3) innerhalb der Detektionskammer bzw. des Strömungskanals 120 begünstigen. Unmittelbar vor dem Lichtsender 130 und dem Lichtempfänger 140 ist jeweils eine Blende 160 angeordnet. Die Blende 160 ist durch eine Innenwandung der Detektionskammer 120 gebildet, wobei eine Ausnehmung oder Öffnung 161 vom Lichtsender 130 kommendes bzw. zum Lichtempfänger 140 führendes Licht ungehindert passieren lässt. Die vor dem Lichtsender 130 positionierte Blende 160 ist doppelwandig, mit einer zusätzlichen, der Detektionskammer 120 zugewandten und in Anströmrichtung vorderen Wandung 162 ausgebildet, die als weitere Fluidleitfläche fungieren kann und verschmutzungsmindernd wirkt.

Der Lichtsender 130 liegt in etwa dem Strömungseinlass 121 und der Lichtempfänger 140 in etwa dem Strömungsauslass 122 gegenüber, sodass eine über den Strömungseinlass 121 in die Detektionskammer 120 einströmende Fluidströmung F den Detektionsbereich DB durchströmt, bevor diese die Detektionskammer 120 über den Strömungsauslass 122 verlässt. Zwischen dem Lichtsender 130 und dem Lichtempfänger 140, jedoch außerhalb des Detektionsbereichs DB befindet sich zur Umlenkung der vom Strömungseinlass 121 kommenden Fluidströmung F in Richtung des Strömungsauslasses 122 ein Strömungsleitbauteil 150. Vorzugsweise sind die zuvor beschriebene Bauteile, mit Ausnahme des Lichtsenders 130 und des Lichtempfängers 140 im Spritzgussverfahren einstückig mit der Partikeldetektionseinheit 100 hergestellt.

Die Figur 2 stellt den in der Figur 1 mit einem Kreis markierten Bereich der Detektionskammer 120 in einem perspektivischen Ausschnitt dar, in welchem das Strömungsleitbauteil 150 in einer Einzelansicht gezeigt ist. Bspw., und wie auch hier dargestellt, ist das Strömungsleitbauteil 150 als gekrümmte Innenwandung der Detektionskammer 120 konstruiert und weist ein Querschnittsprofil in Form eines Ringsegments auf. Die dem Innenradius des Ringsegments folgende, gekrümmte Innenfläche weist in Richtung des Strömungseinlasses 121 und des Strömungsauslasses 122, um als gekrümmte Fluidleitfläche 153 zur Umlenkung der Fluidströmung F zu fungieren. In Anströmrichtung, also in Richtung der die gekrümmte Fluidleitfläche 153 anströmenden Fluidströmung F weist das Strömungsleitbauteil 150 eine Anströmkante 151 mit gerade verlaufender Fluidleitfläche auf, und entsprechend in Abströmrichtung, also in Richtung der von der gekrümmten Fluidleitfläche 153 abströmenden Fluidströmung F, eine Abströmkante 152, ebenfalls mit gerade verlaufender Fluidleitfläche.

Die Figur 3 zeigt eine Ansicht der Partikeldetektionseinheit 100 aus Figur 1, von oben. Besonders gut ist in dieser Ansicht die Geometrie der zuvor beschriebenen, einzelnen Bauteile der Partikeldetektionseinheit 100 und deren Anordnung und Ausrichtung zueinander erkennbar. Die Fluidströmung F, insbesondere der Verlauf der Hauptströmung, ist wiederum anhand von in der Figur 3 eingefügten Pfeilen schematisch angedeutet. Die Fluidströmung F tritt über den Strömungseinlass 121 in die Detektionskammer bzw. den Strömungskanal 120 ein, und nach Durchströmen des Detektionsbereichs DB über den Strömungsauslass 122 aus dem Strömungskanal 120 aus. Die Umlenkung der Fluidströmung F erfolgt dabei maßgeblich durch das Strömungsleitbauteil 150 bzw. dessen gekrümmte Fluidleitfläche 153 und die am Außenradius des U-förmig verlaufenden Strömungskanals 120 liegenden, gekrümmten, äußeren Fluidleitflächen 123. Das Strömungsleitbauteil 150 ist in Strömungsrichtung der Fluidströmung F hinter dem Lichtempfänger 140 und vor dem Lichtsender 130, jedoch außerhalb des Detektionsbereichs DB in einem gegenüber dem Strömungskanal 120 leicht zurückgesetzten Bereich mit trapezförmiger Geometrie angeordnet. Zwei der den trapezförmigen Bereich begrenzenden Flächen bzw. Wandungen sind durch die unmittelbar vor dem Lichtsender 130 bzw. dem Lichtempfänger 140 positionierten Blenden 160 gebildet. Auf diese Weise ist sichergestellt, dass die Fluidströmung F den Detektionsbereich DB durchströmen kann, und das Strömungsleitbauteil 150 gleichzeitig auch außerhalb des vom Lichtsender 130 gesendeten Lichts und des Einfallsbereichs des Lichtempfängers 140 positioniert ist, um die Erkennung von in der Fluidströmung F enthaltenen und in den Detektionsbereich DB transportierten Partikeln nicht zu beeinträchtigen.

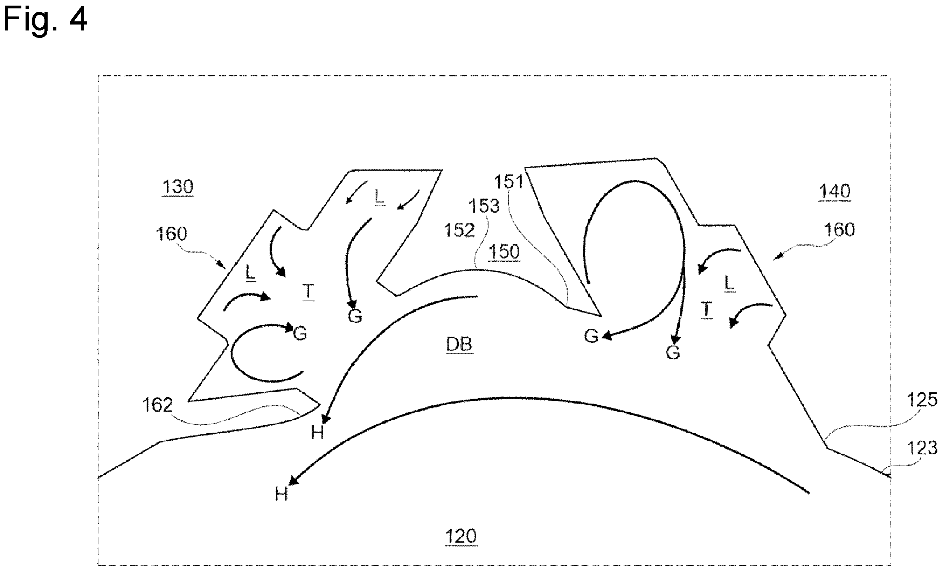

In Strömungsrichtung unmittelbar vor dem Lichtempfänger 140 umfasst der Strömungskanal 120 eine äußere, gekrümmte Fluidleitfläche 123 deren Verlauf in einer Abströmkante 125 endet. Die Fluidströmung F wird entlang der äußeren, gekrümmten Fluidleitfläche 123 geleitet, sodass deren Hauptströmungsweg am Lichtempfänger 140 vorbeiführt. An der Abströmkante 125 reißt die Fluidströmung F ab, löst sich also von der gekrümmten Fluidleitfläche 123, sodass an die Abströmkante 125 anschließend und außerhalb der Hauptströmung liegend ein Bereich mit deutlich verminderter Strömungsgeschwindigkeit und/oder Verwirbelungen und/oder von der Richtung der Hauptströmung abweichender Strömungsrichtung resultiert. Dieser Bereich wird von der Geometrie der Innenwandungen der Detektionskammer 120, insbesondere durch die vor dem Lichtempfänger 140 angeordnete Blende 160 begrenzt. Innerhalb der so definierten Totzone T (s. Figur 4) ist der Lichtempfänger 140 angeordnet. Eine entsprechende Funktion kommt dem in Strömungsrichtung der Fluidströmung F unmittelbar vor dem Lichtsender 130 angeordneten Strömungsleitbauteil 150 bzw. dessen gekrümmter Fluidleitfläche 153 und dessen Abströmkante 152 zu, sodass auch der Lichtsender 130 innerhalb einer durch die angrenzende Geometrie, insbesondere durch die Blende 160 begrenzten Totzone T (s. ebenfalls Figur 4) angeordnet ist. Die Anströmkante 151 des Strömungsleitbauteils 150 soll eine definierte Anströmung der gekrümmten Fluidleitfläche 153 begünstigen und ist entsprechend zur Anströmrichtung ausgerichtet.

Die Figur 4 zeigt schließlich einen schematisch dargestellten Verlauf des Strömungsprofils innerhalb der Detektionskammer 120 einer Partikeldetektionseinheit 100 gemäß der Figur 3. Der dargestellte Strömungskanalausschnitt ist auf den zwischen den beiden Schenkeln liegenden mittleren Bereich des U-förmig verlaufenden Strömungskanals 120 beschränkt. Das gezeigte Strömungsprofil für die vorgegebene Geometrie lässt sich bspw. anhand von Strömungssimulationen ermitteln. Die zugrunde gelegte Strömungsgeschwindigkeit, mit der die Fluidströmung F über den Strömungseinlass 121 in den Strömungskanal 120 eintritt, bewegt sich im üblichen Anwendungsbereich von Ansaugpartikelerkennungssystemen zwischen 1 m/s und 4 m/s und beträgt hier bspw. etwa 1,5 m/s. Entlang der Hauptströmung H, die vom Strömungseinlass 121, dem Verlauf des U-förmigen Strömungskanals 120 folgend, zum Strömungsauslass 122 verläuft, ist die Strömungsgeschwindigkeit näherungsweise konstant und beträgt bspw. in etwa 1,5 m/s. An der in Richtung der Hauptströmung H unmittelbar vor dem Lichtempfänger 140 liegenden Abströmkante 125 reißt die Hauptströmung H von der äußeren, gekrümmten Fluidleitfläche 123 des Strömungskanals 120 ab, wodurch ein außerhalb der Hauptströmung H liegender Bereich mit abweichender Strömungsrichtung und deutlich verringerter Strömungsgeschwindigkeit entsteht. Dieser Bereich wird von der Geometrie der dortigen Innenwandungen der Detektionskammer 120, insbesondere der vor dem Lichtempfänger 140 angeordneten Blende 160 zur Definition einer ersten Totzone T begrenzt. Die Strömungsgeschwindigkeit innerhalb der ersten Totzone T beträgt lediglich einen Bruchteil, bspw. höchstens ein Drittel oder höchstens ein Zehntel der Strömungsgeschwindigkeit der Hauptströmung und kann bereichs- oder zeitweise, insbesondere unmittelbar vor der Blende 160 sogar gegen Null gehen. Innerhalb der Totzone T staut sich das einströmende Fluid an, wodurch eine Art "Luftpolster" L entsteht, welches dem Einströmen von weiterem Fluid entgegenwirkt. Dieser Effekt wird durch eine innerhalb der Totzone T entstehende Verwirbelung verstärkt, die wiederum aus der Totzone T führende Gegenströmungen G erzeugt.

In entsprechender Weise entsteht eine zweite Totzone T an der Abströmkante 152 des Strömungsleitbauteils 150, die mit der vorderen Wandung 162 der vor dem Lichtsender 130 angeordneten Blende 160 zusammenwirkt, sodass das das Fluid entlang der Hauptströmung H am Lichtsender 130 vorbeigeleitet wird. Außerhalb der Hauptströmung H, liegt die zweite Totzone T im "Strömungsschatten" oder Lee des Strömungsleitbauteils 150, wodurch die darin vorliegenden Strömungsgeschwindigkeiten erheblich reduziert sind und lediglich einen Bruchteil, bspw. höchstens ein Drittel oder höchstens ein Zehntel der Strömungsgeschwindigkeit der Hauptströmung betragen, und bereichs- oder zeitweise, insbesondere unmittelbar vor der Blende 160 sogar gegen Null gehen können. Auch innerhalb der zweiten Totzone T entstehen durch Anstauung des einströmenden Fluids bedingte "Luftpolster" L sowie durch Verwirbelungen erzeugte Gegenströmungen G, die dem Einströmen von weiterem Fluid entgegenwirken. Die gekrümmte Fluidleitfläche 153 des Strömungsleitbauteils 150 dient einerseits der Führung und Umlenkung der von der äußeren, gekrümmten Fluidleitfläche 123 kommenden Hauptströmung H und führt andererseits das aus der ersten Totzone T strömende Fluid wieder der Hauptströmung H zu. Die Anströmkante 151 des Strömungsleitbauteils 150 begünstigt eine definierte Anströmung der gekrümmten Fluidleitfläche 153 und ist entsprechend zur Anströmrichtung ausgerichtet.

Der Zusammenhang zwischen dem in der Figur 4 dargestellten Strömungsprofil, insbesondere den in einzelnen Bereichen vorliegenden Strömungsgeschwindigkeiten bzw. -richtungen, und dem durch Partikelablagerungen verursachten Verschmutzungsgrad kann experimentell ermittelt werden. Dabei zeigen sich zwei vorherrschende Effekte. Zum einen können innerhalb der Totzonen T, mit deutlich reduzierter Strömungsgeschwindigkeit und abweichender Strömungsrichtung nahezu keine Partikel nachgewiesen werden, wodurch Verschmutzungen der darin angeordneten optischen Komponenten erheblich reduziert werden. Zum anderen verhindert die konstant schnelle Strömungsgeschwindigkeit im Bereich der Hauptströmung eine Anlagerung von Partikeln an den dortigen Wandungen.

### Bezugszeichenliste

- 100: Partikeldetektionseinheit
- 110: Gehäuse
- 111: Vorderseite
- 120: Detektionskammer/Strömungskanal
- 121: Strömungseinlass
- 122: Strömungsauslass
- 123: gekrümmte, äußere Fluidleitfläche des Strömungskanals
- 124: gekrümmte, innere Fluidleitfläche des Strömungskanals
- 125: Abströmkante des Strömungskanals
- 130: Lichtsender
- 140: Lichtempfänger
- 150: Strömungsleitbauteil
- 151: Anströmkante des Strömungsleitbauteils
- 152: Abströmkante des Strömungsleitbauteils
- 153: gekrümmte Fluidleitfläche des Strömungsleitbauteils
- 160: Blende
- 161: Ausnehmung oder Öffnung
- 162: vordere Wandung

- DB: Detektionsbereich
- F: Fluidströmung
- G: Gegenströmung
- H: Hauptströmung
- L: Luftpolster
- T: Totzone

## Patentansprüche

1. Partikeldetektionseinheit (100), ausgebildet zur Verwendung mit einem Ansaugpartikelerkennungssystem, insbesondere zur Branderkennung, wobei die Partikeldetektionseinheit (100)
- ein Gehäuse (110), mit einer darin angeordneten und von Umgebungslicht abgeschirmten Detektionskammer (120) aufweist, die einen Strömungseinlass (121) zum Eintritt einer Fluidströmung (F) und einen Strömungsauslass (122) zum Austritt der Fluidströmung (F) umfasst, sowie
- einen Lichtsender (130) und einen Lichtempfänger (140), die derart zueinander ausgerichtet sind, dass ein Detektionsbereich (DB) zur Detektion von in der Fluidströmung (F) enthaltenen Partikeln durch Überlagerung des von dem Lichtsender (130) gesendeten Lichts und des Einfallsbereichs des Lichtempfängers (140) innerhalb der Detektionskammer (120) definiert ist,
**dadurch gekennzeichnet, dass**
die Partikeldetektionseinheit (100) mindestens ein Strömungsleitbauteil (150) zur Umlenkung einer über den Strömungseinlass (121) eintretenden Fluidströmung (F) in Richtung des Strömungsauslasses (122) aufweist, wobei das Strömungsleitbauteil (150) innerhalb der Detektionskammer (120) im Bereich der Fluidströmung (F), zwischen dem Strömungseinlass (121) und dem Strömungsauslass (122), jedoch außerhalb des Detektionsbereichs (DB) positioniert ist.

2. Partikeldetektionseinheit (100) nach Anspruch 1,
**dadurch gekennzeichnet, dass**
das Strömungsleitbauteil (150) mit mindestens einer in Richtung des Strömungseinlasses (121) und/oder des Strömungsauslasses (122) gerichteten und gekrümmten Fluidleitfläche (153) ausgebildet ist.

3. Partikeldetektionseinheit (100) nach Anspruch 2,
**dadurch gekennzeichnet, dass**
die gekrümmte Fluidleitfläche (153) des Strömungsleitbauteils (150) eine in Richtung des Strömungseinlasses (121) weisende Anströmkante (151) und/oder eine in Richtung des Strömungsauslasses (122) weisende Abströmkante (152) aufweist.

4. Partikeldetektionseinheit (100) nach einem der vorhergehenden Ansprüche,
**dadurch gekennzeichnet, dass**
der Lichtsender (130) und/oder der Lichtempfänger (140) innerhalb von oder an jeweilige Totzonen (T) angrenzend angeordnet sind, die durch Umlenkung der Fluidströmung (F) mittels des Strömungsleitbauteils (150) innerhalb der Detektionskammer (120) gebildet werden.

5. Partikeldetektionseinheit nach Anspruch 4,
**dadurch gekennzeichnet, dass**
die Totzonen (T) durch Begrenzungen, wie Einbauten oder Wandungen der Detektionskammer (120) baulich begrenzt sind.

6. Partikeldetektionseinheit (100) nach einem der vorhergehenden Ansprüche,
**dadurch gekennzeichnet, dass**
der Strömungseinlass (121) und der Strömungsauslass (122) durch einen den Detektionsbereich (DB) durchsetzenden und von Fluidleitflächen (123, 124) begrenzten Strömungskanal (120) die Fluidströmung (F) leitend miteinander verbunden sind.

7. Partikeldetektionseinheit (100) nach Anspruch 6,
**dadurch gekennzeichnet, dass**
der Strömungskanal (120) eine oder mehrere äußere und innere, gekrümmte Fluidleitflächen (123, 124) aufweisend einem in etwa U-förmigen Verlauf folgend ausgebildet ist.

8. Partikeldetektionseinheit (100) nach Anspruch 7,
**dadurch gekennzeichnet, dass**
der Strömungseinlass (121) und der Strömungsauslass (122) auf derselben Seite des Gehäuses (110) zueinander benachbart angeordnet sind, und der Lichtsender (130) in etwa in Richtung des Strömungseinlasses (121) und der Lichtempfänger (140) in etwa in Richtung des Strömungsauslasses (122) ausgerichtet ist.

9. Partikeldetektionseinheit (100) nach einem der Ansprüche 6 bis 7,
**dadurch gekennzeichnet, dass**
der Strömungseinlass (121) am ersten Schenkel, der Strömungsauslass (122) am zweiten Schenkel und der Lichtsender (130), der Lichtempfänger (140) und das Strömungsleitbauteil (150) im dazwischenliegenden, mittleren Bereich des in etwa U-förmig verlaufenden Strömungskanals (120) angeordnet sind.

10. Partikeldetektionseinheit (100) nach einem der Ansprüche 6 bis 9,
**dadurch gekennzeichnet, dass**
die inneren und/oder äußeren Fluidleitflächen (123, 124) des Strömungskanals (120) mit dem Strömungsleitbauteil (150) zusammenwirken, um die Anlagerung von in einer den Strömungskanal (120) durchströmenden Fluidströmung (F) enthaltenen Partikeln innerhalb der Detektionskammer (120), insbesondere im Bereich des Lichtsenders (130) und/oder des Lichtempfängers (140) zu vermeiden.

11. Partikeldetektionseinheit (100) nach einem der vorhergehenden Ansprüche,
**dadurch gekennzeichnet, dass**
das Strömungsleitbauteil (150) zwischen dem Lichtsender (130) und dem Lichtempfänger (140), jedoch außerhalb des von dem Lichtsender (130) gesendeten Lichts und außerhalb des Einfallsbereichs des Lichtempfängers (140) positioniert ist.

12. Partikeldetektionseinheit (100) nach einem der vorhergehenden Ansprüche,
**dadurch gekennzeichnet, dass**
die Partikeldetektionseinheit (100) im Bereich des Lichtsenders (130) und/oder im Bereich des Lichtempfängers (140) eine Blende (160) aufweist, die den Lichtempfänger (140) gegenüber dem vom Lichtsender (130) gesendeten Licht abschirmt.

13. Partikeldetektionseinheit (100) nach einem der vorhergehenden Ansprüche,
**dadurch gekennzeichnet, dass**
die Partikeldetektionseinheit (100) im Bereich des Lichtsenders (130) und/oder des Lichtempfängers (140) eine Blende (160) aufweist, die zur Vermeidung von Anlagerungen von in der Fluidströmung (F) enthaltenen Partikeln im Bereich des Lichtsenders (130) und/oder des Lichtempfängers (140) doppelwandig mit einer die jeweilige Wandung durchsetzenden Ausnehmung oder Öffnung (161) ausgeführt ist.

14. Partikeldetektionseinheit (100) nach einem der vorhergehenden Ansprüche,
**dadurch gekennzeichnet, dass**
die Partikeldetektionseinheit (100) eine das Gehäuse (110) gemeinsam bildende Oberschale und eine Unterschale umfasst, wobei jeweilige Bauteile, insbesondere das mindestens eine Strömungsleitbauteil (150) und/oder die den Strömungskanal (120) begrenzenden Fluidleitflächen (123, 124) und/oder die im Bereich des Lichtsenders (130) und/oder des Lichtempfängers (140) angeordnete Blenden (160) zweiteilig, durch die Oberschale und die Unterschale gemeinsam gebildet ausgeführt sind.

15. Partikeldetektionseinheit (100) nach einem der vorhergehenden Ansprüche,
**dadurch gekennzeichnet, dass**
die Partikeldetektionseinheit (100) als Spritzgussteil, insbesondere einstückig mit dem mindestens einen Strömungsleitbauteil (150), den den Strömungskanal (120) begrenzenden Fluidleitflächen (123, 124) und/oder den im Bereich des Lichtsenders (130) und/oder des Lichtempfängers (140) angeordnete Blenden (160) hergestellt ist.
